# EUROPÄISCHE PATENTANMELDUNG

(11) **EP 4 282 834 A1**
(43) Veröffentlichungstag der Anmeldung: **29.11.2023**
(21) Anmeldenummer: 22175547.3
(22) Anmeldetag: 25.05.2022
(51) Int. Cl.: C02F 9/00, C02F 3/12, C02F 3/06, C02F 3/20, C02F 3/30

(54) **ABWASSERBEHANDLUNGSSYSTEM SOWIE VERFAHREN ZUM AUSBILDEN DES ABWASSERBEHANDLUNGSSYSTEMS**

(71) Anmelder: Arnold Jäger Holding GmbH, 30559 Hannover (DE)
(72) Erfinder: PAJOOH, Eshan Mohammad, Hannover (DE); KAHLE, Janna, Hannover (DE); VON CONSBRUCH, Hans-Christian, Hannover (DE)
(74) Vertreter: Bremer, Ulrich

(57) **Zusammenfassung**

Die Erfindung betrifft ein Abwasserbehandlungssystem (1), das dadurch gekennzeichnet ist, dass als Funktionskomponente (K) eine Multifunktionswand (3) und/oder ein Zusatzbehälter (6) vorgesehen ist, wobei
- die Multifunktionswand (3) derartig mit dem Behälter (2) verbindbar oder verbunden ist, dass der Innenraum (4) in mindestens zwei Zonen (4a, 4b) unterteilt ist, wobei die Multifunktionswand (3) in Abhängigkeit eines veränderbaren Behandlungszwecks (Z) derartig einstellbar und umstellbar ist, dass die beiden ausgebildeten Zonen (4a, 4b) darüber entweder fluidleitend miteinander verbunden oder voneinander getrennt sind, um in Abhängigkeit der Einstellung der Multifunktionswand (3) und/oder des vorgegebenen Behandlungszwecks (Z) in beiden Zonen (4a, 4b) dieselben oder unterschiedliche Behandlungsschritte (S) durchführen zu können, und/oder
- der Zusatzbehälter (6) einen Zusatzbehälter-Anschluss (9) aufweist, wobei in Abhängigkeit eines veränderbaren Behandlungszwecks (Z) entweder eine fluidleitende Verbindung mit dem Behälter (2) lösbar herstellbar ist oder die fluidleitende Verbindung mit dem Behälter (2) gelöst bleiben kann, um in Abhängigkeit des vorgegebenen Behandlungszweckes (Z) Behandlungsschritte (S) unter Mitwirkung des Zusatzbehälters (6) entweder durchzuführen oder nicht durchzuführen.

## Beschreibung

Die Erfindung betrifft ein Abwasserbehandlungssystem, sowie ein Verfahren zum Ausbilden des Abwasserbehandlungssystems.

Abwasser, wie z.B. kommunales Abwasser oder industrielles Abwasser, ist typischerweise kontaminiert in Bezug auf lösliche und partikuläre biologisch abbaubare organische Stoffe, anorganische Bestandteile, Stickstoff, organisches und anorganisches Phosphor, sowie Mikroorganismen und Mikroverunreinigungen aus menschlichen Exkrementen und Urin. Je nach Standortzustand und lokaler Gesetzgebung können auch potenziell toxische Metalle im Abwasser vorhanden sein, die aus Grauwasser, Nichtwohnabwässern und / oder externen Abwasserströmen wie chemischen Toiletten stammen können.

Die Behandlung von Abwasser kann entweder dezentral vor Ort oder zentral extern erfolgen. Abwasserbehandlungssysteme vor Ort sind oft eine ideale Option, wenn der Zugang zu zentralen Abwasserbehandlungssystemen technisch und/oder wirtschaftlich nicht machbar ist, z. B. in abgelegenen Gebieten wie ländlichen Wohnungen, abgelegene Fabriken, oder in Fällen, in denen ein vorübergehender Bedarf gedeckt werden muss, z. B. Katastrophenhilfe, saisonale Produktion, Friedenssicherung, Flüchtlings- und Arbeitslager.

Für die dezentrale Behandlung von Abwasser stehen mehrere Vor-Ort-Abwasserbehandlungssysteme zur Verfügung, die basierend auf suspendiertem Wachstum (z. B. konventionelle Belebtschlammanlage, konventioneller Sequenzierungsbatchreaktor (SBR)), auf angeschlossenem Wachstum (z. B. Festbett-Biofilmreaktor (FBBR), rotierender Festbett-Biofilmträger (RBC) und Bewegtbett-Biofilmreaktor (MBBR)), oder Kombinationen daraus, oder mit einem aeroben granularen System arbeiten. Beispielhaft ist ein dezentrales Abwasserbehandlungssystem in US 2012/0261337 A1 beschrieben.

Jedes der oben genannten Abwasserbehandlungssysteme hat Vor- und Nachteile. Im Allgemeinen werden die Abwasserbehandlungssysteme hauptsächlich in Abhängigkeit vom erforderlichen Behandlungsziel (d. h. direkte Einleitung, indirekte Einleitung oder Wiederverwendung), der Behandlungskapazität, den Investitionskosten, der Skalierbarkeit, dem geografischen Zustand, der vorhandenen Infrastruktur, Logistikkriterien (z. B. Trockengewicht, Größe und Grad der Mobilität), dem Vorhandensein zusätzlicher Merkmale sowie dem Energieverbrauch, der Wartungshäufigkeit und der Benutzerfreundlichkeit und der Stabilität des Betriebs gescreent und ausgewählt.

Nachteilig hierbei ist, dass ein derartiges dezentrales Abwasserbehandlungssystem in der Praxis nicht in allen der genannten Merkmale gleichzeitig optimiert bzw. effizienter gemacht werden kann, da sich am Einsatzort beispielsweise auch Veränderungen gegenüber der Planung ergeben können. Ein solches Abwasserbehandlungssystem gemäß dem Stand der Technik kann dann bei einer beliebigen nachträglichen Veränderung eines der Merkmale nicht mehr angepasst werden.

Aufgabe der vorliegenden Erfindung ist daher, ein Abwasserbehandlungssystem anzugeben, mit dem in einfacher Weise eine flexible und effiziente Reinigung von Abwasser am jeweiligen Einsatzort ermöglicht werden kann. Aufgabe der Erfindung ist weiterhin, ein Verfahren zum Ausbilden eines solchen Abwasserbehandlungssystems anzugeben.

Diese Aufgabe wird durch ein Abwasserbehandlungssystem und ein Verfahren zu seiner Ausbildung gemäß den unabhängigen Ansprüchen gelöst. Die Unteransprüche geben bevorzugte Weiterbildungen an.

Erfindungsgemäß ist demnach ein Abwasserbehandlungssystem vorgesehen, das ausgehend von einem Behälter als Grundmodul mit mindestens einer Funktionskomponente modular kombiniert werden kann, wobei die modulare Verbindung zwischen dem Behälter und der mindestens einen Funktionskomponente lösbar, vorzugsweise beschädigungsfrei lösbar ist und/oder die mindestens eine Funktionskomponente (beschädigungsfrei) einstellbar und umstellbar ist, so dass eine funktionale Zusammenwirkung zwischen dem Behälter und der mindestens einen Funktionskomponente (beschädigungsfrei) veränderbar bzw. anpassbar ist.

Gemäß der Erfindung ist als Funktionskomponente zumindest (nicht abschließend) mindestens eine Multifunktionswand und/oder mindestens ein Zusatzbehälter vorgesehen, wobei
- die Multifunktionswand derartig mit dem Behälter verbindbar oder verbunden ist, dass der Innenraum in mindestens zwei Zonen unterteilt ist, wobei die Multifunktionswand in Abhängigkeit eines veränderbaren Behandlungszwecks bzw. einer veränderbaren verfahrenstechnischen Zielsetzung derartig einstellbar und umstellbar ist, dass die beiden ausgebildeten Zonen darüber in Abhängigkeit der Einstellung der Multifunktionswand entweder fluidleitend miteinander verbunden oder voneinander getrennt sind, um in Abhängigkeit der Einstellung der Multifunktionswand in beiden Zonen dieselben Behandlungsschritte (bei fluidleitender Verbindung) oder unterschiedliche Behandlungsschritte (bei getrennter Verbindung) durchführen zu können, und/oder
- der mindestens eine Zusatzbehälter mindestens einen Zusatzbehälter-Anschluss aufweist, wobei in Abhängigkeit eines veränderbaren Behandlungszwecks bzw. der veränderbaren verfahrenstechnischen Zielsetzung entweder eine fluidleitende Verbindung mit dem Behälter über den Zusatzbehälter-Anschluss lösbar herstellbar ist oder die fluidleitende Verbindung mit dem Behälter gelöst bleiben kann, um in Abhängigkeit des vorgegebenen Behandlungszweckes bzw. der vorgegebenen verfahrenstechnischen Zielsetzung Behandlungsschritte unter Mitwirkung des Zusatzbehälters entweder durchzuführen oder nicht durchzuführen.

Erfindungsgemäß ist weiterhin ein Verfahren zum Ausbilden bzw. Anpassen eines solchen Abwasserbehandlungssystems vorgesehen.

Vorteilhafterweise wird also ein integriertes bzw. modulares bzw. flexibles Abwasserbehandlungssystem bereitgestellt, das insbesondere in abgelegenen Gebieten dezentral zur Anwendung kommen kann. Der Behälter kann dazu vorzugsweise als ein transportabler Container, insbesondere als ein ISO-Container z.B. nach ISO-Norm 668 ausgebildet sein, beispielsweise mit einer Länge von 20 Fuß oder 40 Fuß. Dieser Behälter kann zum jeweiligen Einsatzort gebracht werden und dort durch ein gezieltes (beschädigungsfreies) Einstellen oder Umstellen der jeweiligen Funktionskomponente, die für den jeweiligen Behandlungszweck bzw. die verfahrenstechnische Zielsetzung am Einsatzort nötig ist, und/oder ein gezieltes (beschädigungsfrei) lösbares Verbinden mit der jeweiligen Funktionskomponente, die für den jeweiligen Behandlungszweck bzw. die verfahrenstechnische Zielsetzung am Einsatzort nötig ist, an das eingehende biologisch abbaubare bzw. zu behandelnde Abwasser, wie z.B. kommunales Abwasser oder industrielles Abwasser, angepasst werden.

Unter dem Behandlungszweck bzw. synonym dazu der verfahrenstechnischen Zielsetzung wird dabei im Rahmen der Erfindung allgemein verstanden, dass in dem Abwasserbehandlungssystem derartige biologische Prozesse unter Mitwirkung des Abwassers stattfinden, dass ein bestimmter Zweck oder ein bestimmtes Ziel erreicht wird. Als Zweck bzw. als Ziel kann beispielsweise vorgegeben werden, das Abwasser zu reinigen oder vorzureinigen bzw. bestimmte vorgegebene Schadstoffe und/oder bestimmte Nährstoffe zu entfernen und/oder Mikroorganismen oder Biomasse unter Mitwirkung des Abwassers anzuzüchten bzw. zu kultivieren, beispielsweise Anammox-Bakterien.

Wird eine beschädigungsfreie lösbare Verbindung oder eine beschädigungsfreie Einstellung bzw. Umstellung ermöglicht, kann die jeweilige Anpassung ohne großen Aufwand vorgenommen werden und das Abwasserbehandlungssystem kann in einfacher Weise auch mehrfach entsprechend angepasst bzw. anders ausgebildet bzw. umgebildet werden.

Das Abwasserbehandlungssystem wird also gezielt und modular an den zu erreichenden Behandlungszweck angepasst, so dass das Abwasser unter Mitwirkung der mindestens einen Funktionskomponente, d.h. zumindest der mindestens einen Multifunktionswand und/oder des mindestens einen Zusatzbehälters, in ein oder mehreren Behandlungsschritten biologisch behandelt, insb. gereinigt wird. Jedes Modul bzw. jede Funktionskomponente kann dann aber auch (beschädigungsfrei) wieder umgebaut bzw. entnommen oder anders eingestellt werden, wenn sich nachträglich ein geänderter Behandlungszweck ergibt und das Abwasser daher in anderen bzw. angepassten Behandlungsschritten biologisch zu behandeln ist. Das Abwasserbehandlungssystem wird dazu entsprechend anders ausgebildet bzw. umgebildet.

Dabei ist gleichzeitig auch eine solche Anpassungsfähigkeit gegeben, dass mehr Abwasser verarbeitet werden kann, indem einzelne Funktionskomponenten, beispielsweise der mindestens eine Zusatzbehälter, in entsprechender Weise zumindest zeitweilig bzw. bei Bedarf funktional mit dem Behälter in Verbindung gebracht werden, um dann auch damit die jeweiligen Behandlungsschritte durchzuführen. Der Betrieb des Abwasserbehandlungssystems kann dabei in effizienter Weise mit nur wenigen Komponenten basierend auf einem SBR-Prozess (SBR, sequencing batch reactor) mit den jeweiligen Behandlungsschritten, je nach Behandlungszweck mit einem Vorbehandlungsschritt und einem Hauptbehandlungsschritt, erfolgen. Dadurch wird eine einfache Bedienung ermöglicht, da dieser Prozess auch von einem gewöhnlichen Bewohner oder ungeschultem Personal bedient oder überwacht werden kann.

Dabei können verschiedene Funktionskomponenten, wie beispielsweise die mindestens eine Multifunktionswand vorgesehen sein, die mit dem Behälter derartig verbindbar oder fest verbunden ist, dass der Innenraum in mindestens zwei Zonen unterteilt ist. In diesen können unterschiedliche Behandlungsschritte durchgeführt werden, wobei dies gezielt je nach Behandlungszweck erfolgen kann.

Dazu kann die Multifunktionswand unterschiedlich (beschädigungsfrei) eingestellt bzw. umgestellt werden, beispielsweise durch mindestens eine Durchtrittsöffnung, die vorzugsweise beschädigungsfrei in eine geöffnete Stellung oder eine geschlossene Stellung derartig gebracht werden kann, dass die beiden ausgebildeten Zonen im Innenraum fluidleitend verbunden sind oder voneinander getrennt sind. Der Behälter kann dann flexibel und je nach Behandlungszweck derartig funktional mit der Multifunktionswand zusammenwirken, dass das Abwasser
- in der geschlossenen Stellung aller Durchtrittsöffnungen in den beiden voneinander getrennten Zonen in unterschiedlichen Behandlungsschritten biologisch behandelbar ist, und
- in der geöffneten Stellung zumindest einiger der Durchtrittsöffnungen, vorzugsweise aller Durchtrittsöffnungen, in den beiden miteinander verbundenen Zonen (automatisch) in denselben Behandlungsschritten biologisch behandelt wird.

Dadurch ist bereits ein hoher Grad an Flexibilität gegeben, da die beiden Zonen je nach Behandlungszweck unterschiedlich betrieben werden können, beispielsweise das Abwasser in der einen Zone in Vorbehandlungsschritten und in der anderen Zone in Hauptbehandlungsschritten behandelt werden kann. Ist aufgrund des vorgegebenen (sich ggf. veränderten) Behandlungszweckes jedoch eine volumenvergrößerte Behandlung des Abwassers vorgesehen, können beide Zonen über die Multifunktionswand auch zusammengeschaltet werden und in diesen können dann dieselben Behandlungsschritte durchgeführt werden. Das Abwasserbehandlungssystem lässt sich also in einfacher Weise anders ausbilden bzw. umbilden, wobei dies dann bei erneuter Veränderung des Behandlungszwecks auch wieder rückgängig gemacht werden kann.

Zudem kann als Funktionskomponente der mindestens eine Zusatzbehälter vorgesehen sein, der mindestens einen Zusatzbehälter-Anschluss aufweist, über den eine vorzugsweise beschädigungsfrei wieder lösbare fluidleitende Verbindung mit dem Behälter herstellbar ist, beispielsweise auch in unterschiedlichen Höhen, um Flüssigkeiten oder flüssigkeitsähnliche Substanzen mit unterschiedlichen Absetzeigenschaften, beispielsweise eine schwere/leichte Schlammfraktion, Klarwasser, vorbehandeltes Abwasser, etc., selektiv auf der entsprechenden Höhe über die fluidleitende Verbindung übertragen zu können. Dadurch kann der Behälter derartig funktional mit dem Zusatzbehälter zusammenwirken, dass in dem Zusatzbehälter befindliches Abwasser oder Flüssigkeiten oder flüssigkeitsähnliche Substanzen in denselben Behandlungsschritten wie in dem Behälter oder in sich davon unterscheidenden Behandlungsschritten biologisch behandelbar ist. Der Funktionsumfang des Abwasserbehandlungssystems kann also erweitert werden und/oder das Volumen für die Behandlung des Abwassers vergrößert werden.

Dadurch kann durch ein entsprechendes Ausbilden des Abwasserbehandlungssystems mit dem Zusatzbehälter auch zeitweise auf geänderte Umgebungsbedingungen reagiert werden, wobei eine derartige Ausbildung mit einem Zusatzbehälter dann aufgrund der beschädigungsfrei wieder lösbaren Verbindung bei sich ändernden Umgebungsbedingungen oder einem sich ändernden Behandlungszweck wieder zurückgenommen werden kann, wodurch wieder ein entsprechend umgebildetes Abwasserbehandlungssystem entsteht. Auch dadurch ist ein hoher Grad an Flexibilität gegeben. Je nach Auslegung des Behandlungsprozesses und/oder der Dimensionierung des Behälters als Grundmodul kann auch mehr als nur ein Zusatzbehälter vorgesehen sein.

Weiterhin kann der Zusatzbehälter derartig ausgeführt sein, dass dieser beschädigungsfrei wieder entnehmbar in den Innenraum des Behälters eingesetzt werden kann. Dadurch kann vorteilhafterweise der Transport vereinfacht werden oder aber auch der Funktionsumfang des Zusatzbehälters zum Platzsparen innerhalb des Behälters genutzt werden, beispielsweise zur Desinfektion von (vor)gereinigtem Abwasser.

Ferner können als Funktionskomponente noch mindestens ein Belüftungssystem zum Einleiten von Luftblasen in das zu behandelnde Abwasser und/oder mindestens ein Festbettmodul mit Trägerkörpern zum Bilden von sessiler Biomasse vorgesehen sein, die beschädigungsfrei lösbar im Behälter und/oder im Zusatzbehälter anordenbar sind und durch die weitere Behandlungsschritte zum Erreichen des jeweils vorgegebenen Behandlungszweckes durchgeführt werden können, insofern dies an dem jeweiligen Einsatzort nötig ist. Grundsätzlich ist es dabei möglich, dass diese Funktionskomponenten auch mit anderen, externen Komponenten, die nicht dem Abwasserbehandlungssystem zugeordnet sind, kombiniert werden. So kann beispielsweise das Belüftungssystem oder ein Bestandteil davon bei Nichtgebrauch im Abwasserbehandlungssystem auch in ein anderes Abwasserbehandlungssystem eingebaut werden, um dessen Funktionsumfang zu erweitern.

Die Erfindung wird nachstehend anhand von Ausführungsbeispielen näher erläutert. Es zeigen:
- Fig. 1, 2, 2a: ein Abwasserbehandlungssystem in Detailansichten;
- Fig. 3a, 3b: eine Multifunktionswand als Bestandteil des Abwasserbehandlungssystems in unterschiedlichen Stellungen; und
- Fig. 4, 5: Abwasserbehandlungssysteme in zwei unterschiedlichen Ausführungsformen.

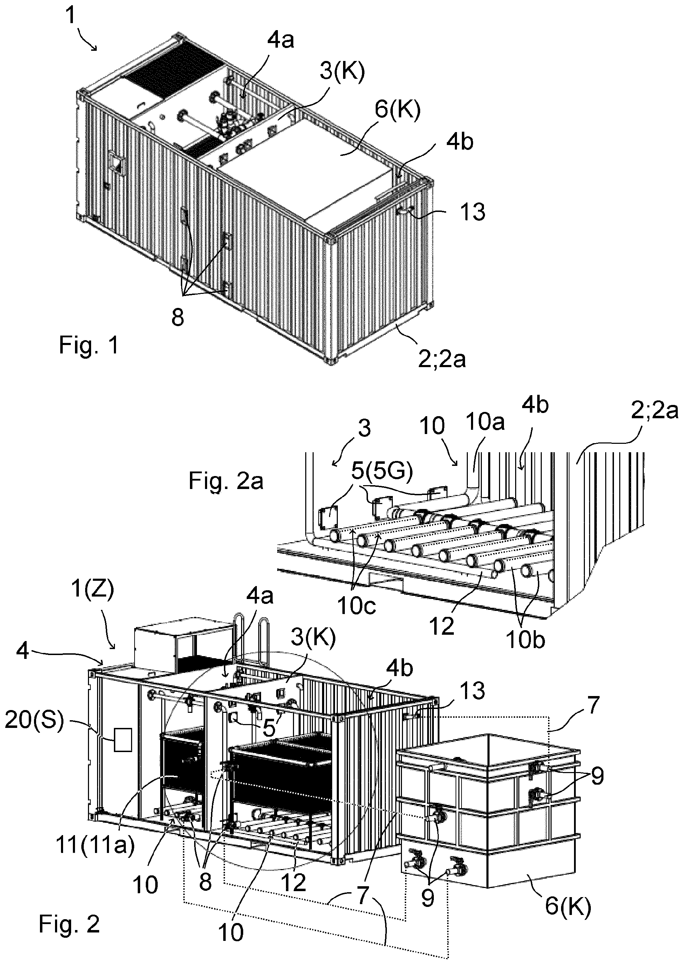

In den Figuren 1 und 2 ist jeweils beispielhaft ein Abwasserbehandlungssystem 1 dargestellt, das einen Behälter 2, beispielsweise einen standardisierten ISO-Container 2a mit einer Länge von 20 Fuß, und mehrere Funktionskomponenten K aufweist, die einstellbar und/oder anpassbar sind und nachfolgend genauer beschrieben werden. Der Behälter 2 kann an einen bestimmten Einsatzort, an dem das Abwasserbehandlungssystem 1 dezentral zum Einsatz kommen soll, transportiert und dort in gewünschter Weise modular aufgebaut werden.

Der Behälter 2 dient dabei als Grundgerüst oder Grundmodul zum Aufbau bzw. für die Herstellung des Abwasserbehandlungssystems 1. Der Behälter 2 kann dabei je nach Behandlungszweck Z, der beispielsweise abhängig von der Abwassereigenschaft, beispielsweise einer Zusammensetzung, einer Temperatur, etc. des Abwassers am Einsatzort ausgewählt werden kann, modular mit einzelnen ausgewählten Funktionskomponenten K kombiniert werden, um das Abwasserbehandlungssystem 1 auszubilden. Das modular aufgebaute bzw. ausgebildete Abwasserbehandlungssystem 1 kann dann in Abhängigkeit des jeweiligen Behandlungszwecks Z je nach Ziel der Behandlung und/oder Bedingungen am Einsatzort in einem bestimmten Betriebsmodus B betrieben werden.

Der Betriebsmodus B gibt dabei an, welche Behandlungsschritte S beispielsweise in mehreren Reinigungszyklen durchlaufen werden, um den ausgewählten Behandlungszweck Z zu erreichen. Das Betreiben bzw. das Durchlaufen der einzelnen Behandlungsschritte S kann dabei über eine Steuereinheit 20 koordiniert werden, die sich wie in Fig. 2 schematisch dargestellt innerhalb oder an dem Behälter 2 befindet oder mit diesem in anderer Weise funktional verbunden ist. Die Steuereinheit 20 ist beispielsweise ausgebildet, ausgewählte Komponenten innerhalb des Abwasserbehandlungssystems 1 gezielt so anzusteuern, dass die jeweiligen Behandlungsschritte S durchgeführt werden.

Der Betriebsmodus B bzw. die in diesem durchgeführten Behandlungsschritte S geben dabei vor, welche Funktionskomponenten K im Abwasserbehandlungssystem 1 benötigt werden und/oder wie diese einzustellen bzw. anzupassen sind, um durch die jeweiligen Behandlungsschritte S den gewünschten Behandlungszweck Z am jeweiligen Einsatzort zu erreichen. Dementsprechend wird das Abwasserbehandlungssystem 1 auch in Abhängigkeit der durchzuführenden Behandlungsschritte S im jeweiligen Betriebsmodus B ausgebildet bzw. aufgebaut, indem die benötigten Funktionskomponenten Kauf modulare Weise funktional mit dem Behälter 2 als Grundmodul in Verbindung gebracht werden und damit funktional mit diesem zusammenwirken.

Ändert sich der Behandlungszweck Z bzw. der Betriebsmodus B an demselben Einsatzort oder soll das Abwasserbehandlungssystem 1 an einem anderen Einsatzort mit einem anderen Behandlungszweck Z bzw. in einem anderen Betriebsmodus B betrieben werden, können die nicht mehr benötigten Funktionskomponenten K vorzugsweise zerstörungsfrei aus dem Behälter 2 entnommen und/oder die Einstellung der jeweiligen Funktionskomponente K gezielt auf den neuen Behandlungszweck Z vorzugsweise zerstörungsfrei angepasst werden. Die funktionale Verbindung bzw. das funktionale Zusammenwirken zwischen dem Behälter 2 und der jeweiligen Funktionskomponente K wird also verändert. Das auf diese modulare Weise angepasste bzw. neu ausgebildete Abwasserbehandlungssystem 1 kann dann nachfolgend in dem jeweils abgewandelten Betriebsmodus B mit anderen oder angepassten Behandlungsschritten S betrieben werden. Dadurch ist insgesamt ein hoher Grad an Flexibilität gegeben.

Eine mögliche Funktionskomponente K ist beispielsweise eine Multifunktionswand 3, die in einen Innenraum 4 des Behälters 2 einsetzbar oder eingesetzt ist. Diese wirkt dann mit dem Behälter 2 derartig funktional zusammen, dass der Innenraum 4 in zwei Zonen 4a, 4b unterteilt wird, wenn die Multifunktionswand 3 eingesetzt ist. In diesen Zonen 4a, 4b kann das Abwasser entsprechend dem Behandlungszweck Z gezielt behandelt werden. Die Multifunktionswand 3 ist dabei derartig einstellbar oder anpassbar, dass das Abwasser in den beiden Zonen 4a, 4b in unterschiedlichen Behandlungsschritten S unabhängig voneinander bzw. getrennt voneinander behandelt werden kann oder das Abwasser in beiden Zonen 4a, 4b mit denselben Behandlungsschritten S gleichermaßen und abhängig voneinander behandelt wird, wie noch näher beschrieben.

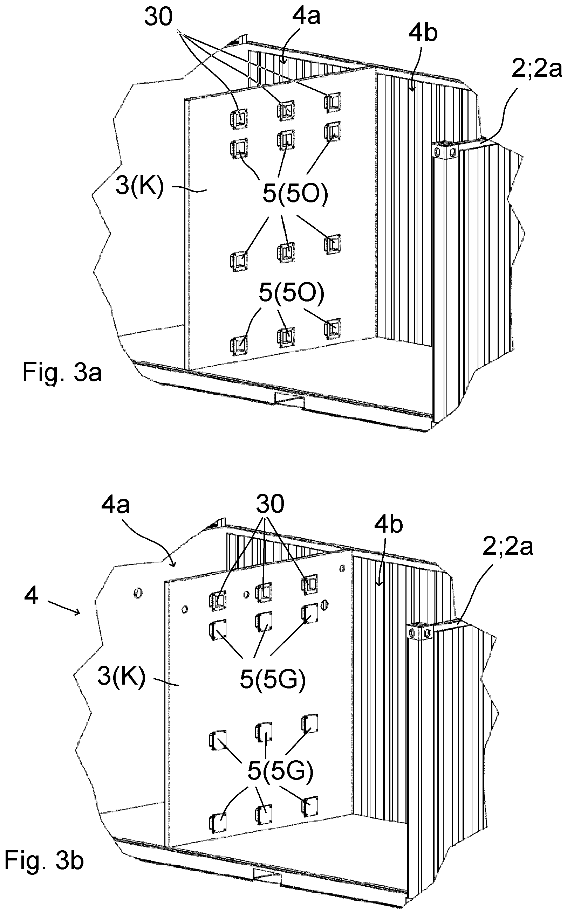

Dazu weist die Multifunktionswand 3 wie in Fig. 3a und 3b im Detail dargestellt unterhalb eines bestimmten Füllstandes beispielsweise mehrere Durchtrittsöffnungen 5 auf, die in eine geöffnete Stellung 5O oder in eine geschlossene Stellung 5G gebracht werden können, um auf diese Weise einen Durchtritt einer Flüssigkeit oder flüssigkeitsähnlichen Substanzen zwischen den beiden Zonen 4a, 4b im Behälter 2 während dieser Einstellung dauerhaft zu ermöglichen oder dauerhaft zu unterbinden. Die Multifunktionswand 3 kann also je nach gewählter Stellung 5O, 5G der Durchtrittsöffnungen 5 unterschiedlich eingestellt werden. Ergänzend können zur Sicherheit oberhalb eines bestimmten Füllstandes eine oder auch mehrere Überlauföffnung(en) 30 vorgesehen sein, die immer geöffnet bleiben.

Folglich kann das Abwasserbehandlungssystem 1 je nach Einstellung der Multifunktionswand 3 bzw. je nach Wahl der Stellung 5O, 5G der Durchtrittsöffnungen 5 unterschiedlich ausgebildet werden, so dass sich unterschiedliche Behandlungsschritte S umsetzen lassen. Die Einstellung der Multifunktionswand 3 erfolgt dabei gezielt in Abhängigkeit davon, welcher Behandlungszweck Z mit einem derartig ausgebildeten Abwasserbehandlungssystem 1 erreicht und damit in welchem Betriebsmodus B das ausgebildete Abwasserbehandlungssystem 1 letztlich am jeweiligen Einsatzort betrieben werden soll.

Soll das Abwasser am jeweiligen Einsatzort beispielsweise in beiden Zonen 4a, 4b unabhängig voneinander behandelt werden, beispielsweise in der ersten Zone 4a in ein oder mehreren Vorbehandlungsschritten S1 und unabhängig davon in der zweiten Zone 4b in ein oder mehreren Hauptbehandlungsschritten S2, so wird das Abwasserbehandlungssystem 1 mit einer Multifunktionswand 3 ausgebildet, bei der sich die Durchtrittsöffnungen 5 in der geschlossenen Stellung 5G befinden (s. Fig. 3b). Soll in einem ausgewählten Betriebsmodus B hingegen ein dauerhafter Austausch von Abwasser zwischen den beiden ausgebildeten Zonen 4a, 4b erreicht werden und in beiden Zonen dieselben Behandlungsschritte S ausgeführt werden, also faktisch eine Volumenvergrößerung erreicht werden, wird ein Abwasserbehandlungssystem 1 mit einer Multifunktionswand 3 ausgebildet, bei der sich die Durchtrittsöffnungen 5 in der geöffneten Stellung 5O befinden (s. Fig. 3a). In beiden Fällen sind zur Sicherheit dauerhaft eine oder mehrere geöffnete Überlauföffnungen 30 vorgesehen, die den jeweils durchgeführten Behandlungsschritt S jedoch nicht beeinflussen.

Als eine weitere Funktionskomponente K kann beispielsweise ein Zusatzbehälter 6 zum Einsatz kommen, der wie in Fig. 2 schematisch dargestellt über Leitungen 7, die jeweils an Behälter-Anschlüssen 8 und Zusatzbehälter-Anschlüssen 9 angeschlossen sind, funktional mit dem Behälter 2 in Verbindung gebracht werden kann. Über die Leitungen 7 kann ein Austausch von Flüssigkeiten oder flüssigkeitsähnlichen Substanzen, beispielsweise behandeltem oder unbehandeltem Abwasser, Schlammfraktionen, oder dgl. zwischen dem Behälter 2 und dem Zusatzbehälter 6 erfolgen. Dadurch, dass die Behälter-Anschlüsse 8 und/oder die Zusatzbehälter-Anschlüsse 9 auf unterschiedlichen Höhen angeordnet sind, kann ein selektiver Abgriff und damit Austausch von Flüssigkeiten oder flüssigkeitsähnlichen Substanzen erfolgen, wobei leichtere Schlammfraktionen oder auch gereinigtes Klarwasser über weiter oben liegende Anschlüsse 8, 9 und schwerere Schlammfraktionen über weiter unten liegende Anschlüsse 8, 9 entnommen bzw. ausgetauscht werden können.

Auf diese Weise kann in Abhängigkeit des Behandlungszwecks Z ein Abwasserbehandlungssystem 1 ausgebildet werden, bei dem der Behälter 2 um den Zusatzbehälter 6 erweitert wird. Das Abwasserbehandlungssystem 1 kann dann mit dem Zusatzbehälter 6 als (weitere) Funktionskomponente K in einem ausgewählten Betriebsmodus B betrieben werden, um den jeweiligen Behandlungszweck Z am Einsatzort zu erreichen, wobei dann auch in dem Zusatzbehälter 6 einzelne Behandlungsschritte S ausgeführt werden.

Die Behälter-Anschlüsse 8 am Behälter 2 können dabei wie in Fig. 2 ersichtlich beispielsweise jeweils einer durch die Multifunktionswand 3 ausgebildeten Zone 4a, 4b zugeordnet sein. Auf diese Weise kann ein Abwasserbehandlungssystem 1 ausgebildet werden, bei dem der Zusatzbehälter 6 über die Leitungen 7 entweder mit nur einer der beiden Zonen 4a, 4b oder aber mit beiden Zonen 4a, 4b gleichzeitig funktional verbunden ist. Der Zusatzbehälter 6 kann dann also fluidtechnisch "in Reihe" mit den anderen beiden Zonen 4a, 4b geschaltet werden oder aber parallel zu mindestens einer der beiden Zonen 4a, 4b. Dies geschieht dann vorzugsweise in Abstimmung mit der Einstellung der Multifunktionswand 3 bzw. dem jeweiligen Behandlungszweck Z bzw. dem daraus folgenden Betriebsmodus B, aus denen sich die Einstellung der jeweiligen Funktionskomponente K bzw. die funktionale Verbindung der jeweiligen Funktionskomponenten K mit dem Behälter 2 ergibt.

Der Zusatzbehälter 6 kann demnach dazu dienen, ein Abwasserbehandlungssystem 1 auszubilden, das einen erweiterten Funktionsumfang aufweist, wenn darin andere Behandlungsschritte S als in den beiden anderen Zonen 4a, 4b ausgeführt werden, und/oder das mit einem höheren Behandlungsvolumen für die biologische Behandlung des Abwassers betrieben werden kann, wenn mindestens eine Zone 4a, 4b mit dem Zusatzbehälter 6 in Reihe geschaltet ist und in beiden derselbe oder dieselben Behandlungsschritte S ausgeführt werden. Ein bestehendes Abwasserbehandlungssystem 1 kann auf diese Weise auch einfach umgebildet bzw. umgerüstet werden, indem der Zusatzbehälter 6 erst im Bedarfsfall mit dem Behälter 2 verbunden oder nachträglich wieder entfernt wird.

Im Rahmen eines modularen und flexiblen Aufbaus ist vorzugsweise vorgesehen, dass der Zusatzbehälter 6 wie in Fig. 1 dargestellt im Innenraum 4 des Behälters 2 untergebracht werden kann, insbesondere in eine der durch die Multifunktionswand 3 ausgebildeten Zonen 4a, 4b wieder entnehmbar eingesetzt werden kann. Dadurch kann der Behälter 2 samt dem Zusatzbehälter 6 platzsparend transportiert werden.

Es kann aber je nach Behandlungszweck Z und Aufbau des Zusatzbehälters 6 auch vorgesehen sein, dass ein Abwasserbehandlungssystem 1 ausgebildet wird, bei dem der Zusatzbehälter 6 auch während eines Behandlungsprozesses in den Innenraum 4 des Behälters 4 eingesetzt ist, insbesondere in die zweite Zone 4b wie in Fig. 1 dargestellt. Wird der Zusatzbehälter 6 dann in entsprechender Weise fluidleitend mit dem Innenraum 4 des Behälters 2 verbunden, insbesondere mit der über die Multifunktionswand 3 abgetrennten ersten Zone 4a, können auch in dem Zusatzbehälter 6 des derart ausgebildeten Abwasserbehandlungssystems 1 entsprechende Behandlungsschritte S durchgeführt werden, um einen bestimmten Behandlungszweck Z am Einsatzort zu erreichen.

Als weitere Funktionskomponente K kann ein Belüftungssystem 10 zum Einsatz kommen, das wie in Fig. 2a dargestellt aus einer Hauptluftleitung 10a und mehreren Belüftungselementen 10b, beispielsweise Rohrbelüftern mit Löchern 10c bzw. Perforationen, zusammengesetzt ist. Dieses Belüftungssystem 10 kann im Innenraum 4 des Behälters 2 und/oder des Zusatzbehälters 6 (falls als Funktionskomponente K im Abwasserbehandlungssystem 1 vorhanden) angeordnet sein. Kommt eine Multifunktionswand 3 als Funktionskomponente K im Behälter 2 zum Einsatz, kann wie in Fig. 3 dargestellt in jeder Zone 4a, 4b ein solches Belüftungssystem 10 angeordnet sein.

Das Belüftungssystem 10 als (weitere) Funktionskomponente K kann also dazu dienen, ein Abwasserbehandlungssystem 1 auszubilden, bei dem je nach Behandlungszweck Z zusätzlich in einem Belüftungsschritt S3 als Behandlungsschritt S Luftblasen L einer bestimmten Intensität durch die Löcher 10c in das biologisch zu behandelnde Abwasser eingelassen werden können. Vorzugsweise sind die Belüftungselemente 10b dazu in einem unteren Bereich des jeweiligen Behälters 2, 6 bzw. der jeweiligen Zone 4a, 4b anzuordnen, so dass die Luftblasen L je nach ausgewähltem Betriebsmodus B bzw. Behandlungszweck Z auf die jeweils vorhandene Biomasse im Behandlungsprozess einwirken kann, um diese beispielsweise mit Sauerstoff zu versorgen. Ein bestehendes Abwasserbehandlungssystem 1 kann auf diese Weise auch einfach umgebildet bzw. umgerüstet werden, indem das Belüftungssystem 10 im Bedarfsfall eingesetzt oder nachträglich wieder entnommen wird.

Als weitere Funktionskomponente K kann ein Festbettmodul 11 mit Trägerkörpern 11a zum Einsatz kommen, das wie in Fig. 3 dargestellt insbesondere in der ersten Zone 4a angeordnet sein kann oder wie in Fig. 2 dargestellt auch in beiden Zonen 4a, 4b des Behälters 2. Im Rahmen des biologischen Behandlungsprozesses, der dann in der ersten Zone 4a (und/oder in der zweiten Zone 4b) zum Einsatz kommt, kann sich an den Trägerkörpern 11a des Festbettmoduls 11 sessile Biomasse aus den in dem verunreinigten Abwasser befindlichen Mikroorganismen ansiedeln. Die Trägerkörper 11a sind dabei in der ersten Zone 4a (und ggf. weiteren Zonen/Behältern mit einem solchen Festbettmodul 11) in das eingefüllte Abwasser vollständig eingetaucht, so dass sich sessile Biomasse bilden kann und sich bereits angesiedelte sessile Mikroorganismen in der sessilen Biomasse von den Schadstoffen in dem verunreinigten Abwasser ernähren können und sich diese dadurch vermehren.

Das Festbettmodul 11 als (weitere) Funktionskomponente K kann also dazu dienen, ein Abwasserbehandlungssystem 1 auszubilden, bei dem je nach Behandlungszweck Z zusätzlich sessile Biomasse zur Behandlung des Abwassers A in der jeweiligen Zone 4a, 4b bzw. im jeweiligen Behälter 2, 6 bereitgestellt werden kann, die dann ergänzend zur suspendierten Biomasse für eine Behandlung des Abwassers A im jeweiligen Behandlungsschritt S sorgen kann. Ein bestehendes Abwasserbehandlungssystem 1 kann auf diese Weise auch einfach umgebildet bzw. umgerüstet werden, indem das Festbettmodul 11 im Bedarfsfall eingesetzt oder nachträglich wieder entnommen wird. Statt des Festbettmoduls 11 kann im Behandlungsprozess aber auch ein Wirbelbett zum Einsatz kommen, bei dem freischwimmende Trägerkörper 11b in die jeweilige Zone 4a, 4b bzw. in den jeweiligen Behälter 2, 6 eingebracht werden, wobei sich die sessile Biomasse dann auf den freischwimmenden Trägerkörpern ansiedeln kann.

Bei der beschriebenen Vorgehensweise werden zur modularen Ausbildung des Abwasserbehandlungssystems 1 zunächst der Behälter 2 als Grundmodul und die Funktionskomponenten K sowie die Steuereinheit 20 bereitgestellt, die zur Umsetzung des festgelegten Behandlungszweckes Z bzw. zur Durchführung der nötigen Behandlungsschritte S am Einsatzort benötigt werden. Anschließend werden die Funktionskomponenten K eingestellt bzw. angepasst (bei einer fest eingebauten Multifunktionswand 3) und/oder funktional mit dem Behälter 2 verbunden (bei einer lösbaren Multifunktionswand 3, einem Zusatzbehälter 6, einem Belüftungssystem 10, einem Festbettmodul 11, etc.), um das Abwasserbehandlungssystem 1 auszubilden. Mit dem ausgebildeten Abwasserbehandlungssystem 1 ist dann der jeweilige Betriebsmodus B mit den jeweiligen Behandlungsschritten S zum Erreichen des jeweiligen Behandlungszweckes Z durchführbar.

Der Behandlungszweck Z der mit dem modular hergestellten Abwasserbehandlungssystem 1 erreicht werden soll, richtet sich dabei allgemein nach den Abwassereigenschaften, insbesondere nach den jeweiligen Schadstoffen im Abwasser, beispielsweise lösliche und partikuläre biologisch abbaubare organische Stoffe, anorganische Bestandteile, Stickstoff, organisches und anorganisches Phosphor, sowie Mikroorganismen und Mikroverunreinigungen aus menschlichen Exkrementen und Urin. Je nach Einsatzort des Abwasserbehandlungssystems 1 und der lokalen Gesetzgebung können als Schadstoffe auch potenziell toxische Metalle im Abwasser vorhanden sein, die aus Grauwasser, Nichtwohnabwässern und/oder externen Abwasserströmen wie chemischen Toiletten stammen können.

Ergibt sich am jeweiligen Einsatzort, dass sich die Eigenschaften des Abwassers ändern, insbesondere die Temperatur und/oder die Zusammensetzung des Abwassers und/oder ab einem bestimmten Zeitpunkt andere Schadstoffe aus dem Abwasser zu entfernen sind, d.h. auch ein anderer Behandlungszweck Z erreicht werden soll, wird das Abwasserbehandlungssystem 1 entsprechend angepasst bzw. umgebildet bzw. anders ausgebildet, indem einzelne Funktionskomponenten K vorzugsweise zerstörungsfrei entnommen und/oder anders eingestellt bzw. angepasst und/oder in einer anderen Weise funktional mit dem Behälter 2 verbunden werden. Der Behandlungszweck Z und/oder der daraus folgende Betriebsmodus B mit den jeweiligen Behandlungsschritten S legt/legen somit den Aufbau bzw. die Ausbildung des Abwasserbehandlungssystems 1 fest, so dass sich der modulare Aufbau des Abwasserbehandlungssystems 1 nur dann ändert, wenn sich der Behandlungszweck Z und/oder der daraus folgende Betriebsmodus B ändert.

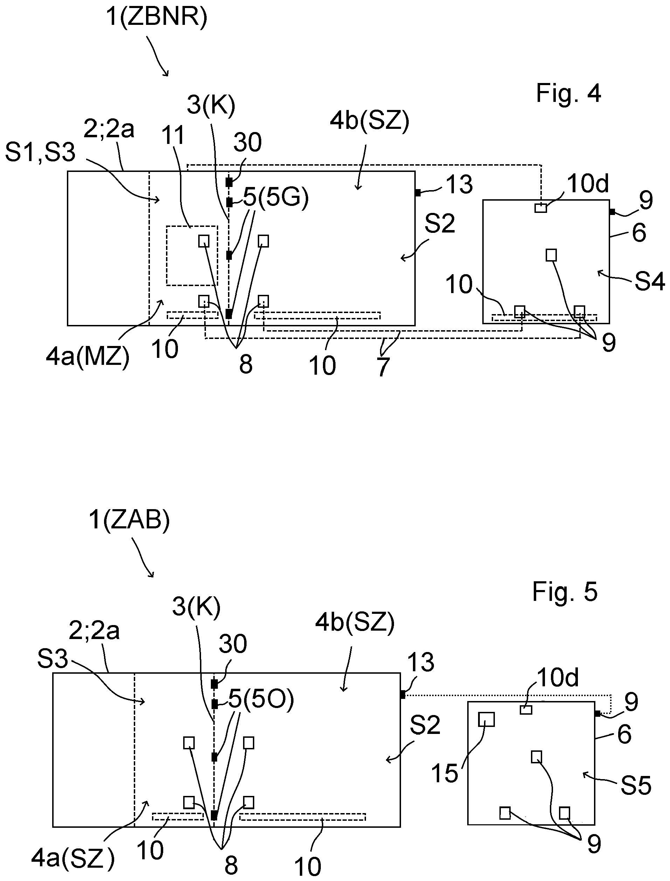

Nachfolgend werden beispielhaft zwei unterschiedliche Abwasserbehandlungssysteme 1 beschrieben, die jeweils in einem anderen Betriebsmodus B mit unterschiedlichen Behandlungsschritten S betrieben werden. Dabei wird auf dieselben Funktionskomponenten K zurückgegriffen, wobei diese lediglich anders eingestellt und/oder funktional unterschiedlich mit dem Behälter 2 verbunden werden, so dass zwei unterschiedliche Abwasserbehandlungssysteme 1 ausgebildet werden. Zunächst soll dabei in einem ersten Ausführungsbeispiel als Behandlungszweck Z von einer biologischen Nährstoffentfernung ZBNR ausgegangen werden, wofür zunächst das in Fig. 4 schematisch dargestellte Abwasserbehandlungssystem 1 ausgebildet wird:
Zur Umsetzung der biologischen Nährstoffentfernung ZBNR wird eine Multifunktionswand 3 als Funktionskomponente K im Behälter 2 verwendet und diese derartig eingestellt bzw. derartig angepasst, dass sich im Innenraum 4 des Behälters 2 (Grundmodul) zwei Zonen 4a, 4b ausbilden, die im folgenden Mehrzweckzone MZ und SBR-Zone SZ genannt werden. Die Durchtrittsöffnungen 5 in der Multifunktionswand 3 sind dabei wie in Fig. 3 dargestellt alle in die geschlossene Stellung 5G überführt, um zwei unabhängige biologische Reaktoren in den beiden Zonen 4a (MZ), 4b (SZ) zu schaffen.

Weiterhin sind als Funktionskomponenten K ein Belüftungssystem 10 sowohl in der Mehrzweckzone MZ als auch in der SBR-Zone SZ sowie optional, je nach Behandlungsziel und/oder Bedingungen am Einsatzort, ein Festbettmodul 11 in der Mehrzweckzone MZ angeordnet. Weiterhin ist ein Zusatzbehälter 6 als Funktionskomponente K vorgesehen, der über Leitungen 7 sowohl mit der Mehrzweckzone MZ als auch mit der SBR-Zone SZ funktional verbunden ist. In dem Zusatzbehälter 6 befindet sich ebenfalls ein Belüftungssystem 10 als weitere Funktionskomponente K, das über einen Belüftungsschlauch 10d vom Behälter 2 aus mit Luft versorgt wird. In einem derartig modular ausgebildeten Abwasserbehandlungssystem 1 können gesteuert von der Steuereinheit 20 die folgenden Behandlungsschritte S zur Behandlung des Abwassers vorgesehen sein:
Das über entsprechende Zuleitungen 12 in die erste Zone 4a bzw. die Mehrzweckzone MZ von unten eingeleitete (Roh-)Abwasser kann im Betrieb des Abwasserbehandlungssystems 1 zunächst in ein oder mehreren biologischen Vorbehandlungsschritt(en) S1 behandelt werden. Dadurch kann im Rahmen der biologischen Nährstoffentfernung ZBNR zunächst das gewünschte Kohlenstoff-Stickstoff-Verhältnis (C:N) vor den eigentlichen Hauptbehandlungsschritt(en) S2 eingestellt werden. Die Hauptbehandlungsschritt(e) S2 finden dabei getrennt bzw. unabhängig von den Vorbehandlungsschritt(en) S1 in der zweiten Zone 4b bzw. in der SBR-Zone SZ statt. Durch das Einstellen der Multifunktionswand 3 mit den geschlossenen Durchtrittsöffnungen 5 können also gezielt unterschiedliche Behandlungsschritte S; S1, S2 in den beiden ausgebildeten Zonen 4a (MZ), 4b (SZ) durchgeführt werden.

Sobald die Mehrzweckzone MZ auf das vorgesehene Niveau mit Abwasser befüllt ist, wird das in der Mehrzweckzone MZ eingebaute Belüftungssystem 10 im Rahmen der Vorbehandlungsschritte S1 in einem Belüftungsschritt S3 aktiviert. Während dieser aeroben Phase baut die Biomasse in der Mehrzweckzone MZ organische Substrate, d.h. BSB5, ab und wandelt sie teilweise in Biomasse und teilweise in Kohlendioxid (CO2) um. Diese Biomasse in der Mehrzweckzone MZ besteht aus konventionellen Schwebstoffen (bestehend aus mehrheitlich flockenbildenden und teilweise fadenförmigen Bakterien), sessiler Biomasse sowie aus einem abgelösten Biofilm, der sich beispielsweise von den Trägerkörpern 11a des Festbettmoduls 11 oder von den freischwimmenden Trägerkörpern 14 eines Wirbelbetts abgelöst hat.

Da in dieser Mehrweckzone MZ die Hauptaufgabe der vorhandenen Biomasse in der Reduzierung biologisch abbaubarer organischer Stoffe des Abwassers liegt, wird das Schlammalter bzw. die mittlere Verweildauer von Schwebstoffen/Schlammflocken im Reaktor (SRT solid retention time) kurz gehalten (z.B. typischerweise zwischen etwa 3 und 5 Tagen, abhängig von der Abwassertemperatur). In ähnlicher Weise besteht die sessile Biomasse in dieser Zone aus einem spezialisierten Biofilm, der aus mikrobiellen Kulturen besteht, die hauptsächlich in der Lage sind, organische Stoffe zu reduzieren, anstatt Substrate wie Ammonium umzuwandeln (bekannt als Nitrifikation). Zudem wird in dieser Mehrzweckzone MZ ein Trägerkörper 11a, 14 verwendet, der hauptsächlich für die organische Reduktion geeignet ist.

Am Ende des Aufbereitungszyklus wird das in der Mehrzweckzone MZ vorbehandelte Abwasser nach einer Absetzphase, dementsprechend ausschließlich die klare Wasserphase, aus der Mehrzweckzone MZ in die zweite Zone 4b bzw. SBR-Zone SZ weitergegeben, beispielsweise über eine Rohrleitung, die mit einer Pumpe in Wirkverbindung steht, wobei das vorbehandelte Abwasser vorzugsweise unterseitig über entsprechend angeordnete Zuleitungen 12 in die SBR-Zone SZ geleitet wird. Anschließend wird die Mehrzweckzone MZ neu befüllt und es beginnt ein neuer Vorbehandlungszyklus in den beschriebenen Vorbehandlungsschritten S1.

In der SBR-Zone SZ werden unabhängig von den Vorbehandlungsschritten S1 (vgl. Mehrzweckzone MZ) die Hauptbehandlungsschritte S2 durchgeführt, wobei in diesen das in der Mehrzweckzone MZ vorbehandelte Abwasser durch einen entsprechenden Biofilm bzw. Biomasse biologisch behandelt wird, wobei dies gemäß einem üblichen SBR-Verfahren in wiederkehrenden Reinigungszyklen erfolgt. In einem solchen SBR-Verfahren sind als Hauptbehandlungsschritte S2 insbesondere eine Chargenbeschickung, eine Reaktionsphase, eine Absetzphase, eine Abzugsphase und ggf. einer Phase des Stillstandes vorgesehen.

Die Chargenbeschickung umfasst die vorzugsweise unterseitige Befüllung der SBR-Zone SZ mit dem vorbehandelten Abwasser aus der Mehrzweckzone MZ über entsprechend angeordnete Zuleitungen 12 in Kombination mit einer Zuführung von unbehandeltem Rohabwasser über eine weitere Zuleitung. Anschließend findet in der Reaktionsphase, die sich aus einer anaeroben Durchmischungsphase und einer anschließenden Belüftungsphase in einem Belüftungsschritt S3 zusammensetzen kann, die Umwandlung der Abwasserinhaltsstoffe statt. Während der Absetzphase wird Biomasse, d.h. Schlammflocken in der Suspension, vom gereinigten Abwasser bzw. Klarwasser getrennt. Das gereinigte Klarwasser wird der SBR-Zone SZ anschließend in der darauffolgenden Abzugsphase über einen Ablauf 13 bzw. Dekanter entnommen. Anschließend beginnt der Reinigungszyklus von Neuem.

Die überschüssige Biomasse aus den Vorbehandlungsschritten S1 in der Mehrzweckzone MZ und den Hauptbehandlungsschritten S2 in der SBR-Zone SZ wird nach der Absetzphase, in aufkonzentrierter Form, über die (unterseitigen) Behälter-Anschlüsse 8, die vorliegend jeder Zone 4a (MZ), 4b (SZ) einzeln zugeordnet sind, über die Leitungen 7 in den Zusatzbehälter 6 geleitet und dort in einem Stabilisierungsschritt S4 stabilisiert. Dazu wird auch über ein Belüftungssystem 10 im Zusatzbehälter 6, das beispielsweise mit dem Belüftungssystem 10 in der SBR-Zone SZ und/oder in der Mehrzweckzone MZ gekoppelt ist, belüftet. In regelmäßigen Abständen kann die klare Wasserphase im Zusatzbehälter 6 nach dem Absetzen des Schlammes bzw. der Biomasse entnommen und auf diese Weise Kapazität für eine weitere Entnahme von überschüssiger Biomasse aus der Mehrzweckzone MZ und/oder der SBR-Zone SZ bereitgestellt werden.

In einem zweiten Ausführungsbeispiel wird als Behandlungszweck Z von einer Abwasseraufbereitung zu Bewässerungszwecken ZAB ausgegangen, wofür zunächst das in Fig. 5 schematisch dargestellte Abwasserbehandlungssystem 1 ausgebildet wird:
Zur Umsetzung der Abwasseraufbereitung zu Bewässerungszwecken ZAB, beispielsweise auf Feldern, wird eine Multifunktionswand 3 als Funktionskomponente K im Behälter 2 verwendet und diese derartig eingestellt bzw. derartig angepasst, dass sich im Innenraum 4 des Behälters 2 (Grundmodul) zwei Zonen 4a, 4b ausbilden. Die Durchtrittsöffnungen 5 in der Multifunktionswand 3 sind dabei alle in die geöffnete Stellung 5O überführt, um einen einzigen biologischen Reaktor in den beiden Zonen 4a, 4b zu schaffen. Die SBR-Zone SZ ist also in dem Fall für eine Volumenvergrößerung über beide Zonen 4a, 4b ausgedehnt.

Weiterhin ist als Funktionskomponente Kein Belüftungssystem 10 zumindest in der ersten Zone 4a angeordnet. Außerdem ist ein Zusatzbehälter 6 als Funktionskomponente K vorgesehen, der über eine Leitung 7, die beispielsweise an dem Ablauf 13 am Behälter 2 angeschlossen ist, mit der SBR-Zone SZ funktional verbunden ist. In dem Zusatzbehälter 6 kann als weiterer Behandlungsschritt S ein Desinfektionsschritt S5 wie nachfolgend beschrieben durchgeführt werden. In einem derartig modular ausgebildeten Abwasserbehandlungssystem 1 können gesteuert von der Steuereinheit 20 die folgenden Behandlungsschritte S zur Behandlung des Abwassers vorgesehen sein:
Liegt ein Abwasser mit einer geringen Belastung vor, besteht die Möglichkeit, das Abwasser mit dem Ziel aufzubereiten, dass es nach dem Aufbereitungsprozess für die Bewässerung wiederverwendet werden kann. Dazu wird das Abwasserbehandlungssystem 1 abweichend zu dem ersten Ausführungsbeispiel derartig betrieben, dass die anaeroben/anoxischen Mixphasen entfallen, so dass in den durchgeführten Behandlungsschritten S gemäß dieser Ausführungsform der Prozess der Nitrifikation (Abbau von Ammonium zu Nitrat) im Vordergrund steht. Dies erfolgt dadurch, dass in einem Belüftungsschritt S3 das am Boden zumindest der ersten Zone 4a und/oder auch der zweiten Zone 4b des Behälters 2 angeordnete Belüftungssystem 10 Luftblasen in das Abwasser einleitet.

Die Denitrifikation läuft nur noch teilweise im Biofilm ab oder während des Befüllens der volumenvergrößerten SBR-Zone SZ mit dem (Roh-)Abwasser, jedoch entfällt eine vollständige Denitrifikation. Die Befüllung findet dabei vorzugsweise auch hier unterseitig über die Zuleitungen 12 in der jeweiligen Zone 4a, 4b des Behälters 2 statt. Aufgrund der geringen Belastung des Abwassers lassen sich am Ablauf 13 bzw. Dekanter nach der Reinigung etwas erhöhte Nitratwerte feststellen, die für die Bewässerung allerdings nicht schädlich sind und im Gegenteil einen positiven Einfluss basierend auf einem Düngeeffekt haben.

Vor dem Auftrag des aufbereiteten Abwassers zur Bewässerung von z.B. Feldern ist noch ein Desinfektionsschritt S5 erforderlich. Dies erfolgt dadurch, dass der Ablauf 13 bzw. Dekanter über die Leitung 7 mit dem Zusatzbehälter 6 funktional verbunden wird. Das aufbereitete Abwasser bzw. Klarwasser kann demnach über den Ablauf 13 bzw. den Dekanter oberseitig aus der SBR-Zone SZ entnommen und in den Zusatzbehälter 6 geleitet werden. In diesem Zusatzbehälter 6 sind beispielsweise UV-Lampen 15 installiert, mittels welcher der Desinfektionsschritt S5 durchgeführt wird. Anschließend kann das aufbereitete und desinfizierte Abwasser entnommen und für die Bewässerung verwendet werden.

### Bezugszeichenliste

- 1: Abwasserbehandlungssystem
- 2: Behälter
- 2a: ISO-Container
- 3: Multifunktionswand
- 4: Innenraum
- 4a, 4b: erste/zweite Zone im Innenraum 4
- 5: Durchlassöffnungen
- 5O: offene Stellung der Durchlassöffnung 5
- 5G: geschlossene Stellung der Durchlassöffnung 5
- 6: Zusatzbehälter
- 7: Leitungen
- 8: Behälter-Anschluss
- 9: Zusatzbehälter-Anschluss
- 10: Belüftungssystem
- 10a: Hauptluftleitung
- 10b: Belüftungselement
- 10c: Löcher
- 10d: Belüftungsschlauch
- 11: Festbettmodul
- 11a: Trägerkörper des Festbettmoduls 11
- 12: Zulauf
- 13: Ablauf
- 14: freischwimmende Trägerkörper
- 15: UV-Lampe
- 20: Steuereinheit
- 30: Überlauföffnungen
- B: Betriebsmodus
- K: Funktionskomponenten
- MZ: Mehrzweckzone
- S: Behandlungsschritte
- S1: Vorbehandlungsschritt
- S2: Hauptbehandlungsschritt
- S3: Belüftungsschritt
- S4: Stabilisierungsschritt
- S5: Desinfektionsschritt
- SZ: SBR-Zone
- Z: Behandlungszweck
- ZAB: Abwasseraufbereitung zu Bewässerungszwecken
- ZBNR: biologische Nährstoffentfernung

## Patentansprüche

1. Abwasserbehandlungssystem (1) mit einem Behälter (2) und mindestens einer mit dem Behälter (2) verbundenen oder verbindbaren Funktionskomponente (K), wobei der Behälter (2) mindestens einen Zulauf (12) aufweist, über den zu behandelndes Abwasser in einen Innenraum (4) des Behälters (2) eingeleitet werden kann,
wobei der Behälter (2) mit der mindestens einen Funktionskomponente (K) derartig funktional zusammenwirkt oder zusammenwirken kann, dass das eingeleitete Abwasser zum Erreichen eines vorgegebenen Behandlungszweckes (Z) unter Mitwirkung der mindestens einen Funktionskomponente (K) in ein oder mehreren Behandlungsschritten (S) in dem Abwasserbehandlungssystem (1) biologisch behandelt werden kann,
**dadurch gekennzeichnet, dass**
als Funktionskomponente (K) mindestens eine Multifunktionswand (3) und/oder mindestens ein Zusatzbehälter (6) vorgesehen ist, wobei
- die Multifunktionswand (3) derartig mit dem Behälter (2) verbindbar oder verbunden ist, dass der Innenraum (4) in mindestens zwei Zonen (4a, 4b) unterteilt ist, wobei die Multifunktionswand (3) in Abhängigkeit eines veränderbaren Behandlungszwecks (Z) derartig einstellbar und umstellbar ist, dass die beiden ausgebildeten Zonen (4a, 4b) darüber entweder fluidleitend miteinander verbunden oder voneinander getrennt sind, um in Abhängigkeit der Einstellung der Multifunktionswand (3) und/oder des vorgegebenen Behandlungszwecks (Z) in beiden Zonen (4a, 4b) dieselben Behandlungsschritte (S) oder unterschiedliche Behandlungsschritte (S) durchführen zu können, und/oder
- der mindestens eine Zusatzbehälter (6) mindestens einen Zusatzbehälter-Anschluss (9) aufweist, wobei in Abhängigkeit eines veränderbaren Behandlungszwecks (Z) entweder eine fluidleitende Verbindung mit dem Behälter (2) über den Zusatzbehälter-Anschluss (9) lösbar herstellbar ist oder die fluidleitende Verbindung mit dem Behälter (2) gelöst bleiben kann, um in Abhängigkeit des vorgegebenen Behandlungszweckes (Z) Behandlungsschritte (S) unter Mitwirkung des Zusatzbehälters (6) entweder durchzuführen oder nicht durchzuführen.

2. Abwasserbehandlungssystem (1) nach Anspruch 1, **dadurch gekennzeichnet, dass** die Multifunktionswand (3) mindestens eine Durchtrittsöffnung (5) aufweist, wobei die mindestens eine Durchtrittsöffnung (5) in eine geöffnete Stellung (5O) oder eine geschlossene Stellung (5G) gebracht werden kann, vorzugsweise beschädigungsfrei, um die beiden ausgebildeten Zonen (4a, 4b) im Innenraum (4) fluidleitend zu verbinden oder voneinander zu trennen.

3. Abwasserbehandlungssystem (1) nach Anspruch 2, **dadurch gekennzeichnet, dass** der Behälter (2) derartig funktional mit der Multifunktionswand (3) zusammenwirkt, dass das Abwasser
- in der geschlossenen Stellung (5G) aller Durchtrittsöffnungen (5) in den beiden voneinander getrennten Zonen (4a, 4b) in unterschiedlichen Behandlungsschritten (S) biologisch behandelbar ist, und
- in der geöffneten Stellung (5O) zumindest einiger der Durchtrittsöffnungen (5), vorzugsweise aller Durchtrittsöffnungen (5), in den beiden miteinander verbundenen Zonen (4a, 4b) in denselben Behandlungsschritten (S) biologisch behandelt wird.

4. Abwasserbehandlungssystem (1) nach einem der vorhergehenden Ansprüche, **dadurch gekennzeichnet, dass** mindestens einer der ausgebildeten Zonen (4a, 4b) ein Behälter-Anschluss (8) und/oder ein Ablauf (13) am Behälter (2) zugeordnet ist, über den eine wieder lösbare fluidleitende Verbindung, vorzugsweise eine beschädigungsfrei wieder lösbare fluidleitende Verbindung zwischen der jeweils zugeordneten Zone (4a, 4b) und einer außerhalb des Behälters (2) angeordneten Leitung (7) hergestellt ist oder werden kann, wobei die Leitung (7) mit dem Zusatzbehälter-Anschluss (9) des mindestens einen Zusatzbehälters (6) wieder lösbar, vorzugsweise beschädigungsfrei wieder lösbar verbunden ist oder werden kann.

5. Abwasserbehandlungssystem (1) nach einem der vorhergehenden Ansprüche, **dadurch gekennzeichnet, dass** der Behälter (2) über die fluidleitende Verbindung derartig funktional mit dem Zusatzbehälter (6) zusammenwirkt, dass in dem Zusatzbehälter (6) befindliches Abwasser oder Flüssigkeiten oder flüssigkeitsähnliche Substanzen in denselben Behandlungsschritten (S) wie in dem Behälter (2) oder in sich davon unterscheidenden Behandlungsschritten (S) biologisch behandelbar sind.

6. Abwasserbehandlungssystem (1) nach einem der vorhergehenden Ansprüche, **dadurch gekennzeichnet, dass** der Zusatzbehälter (6) derartig ausgeführt ist, dass dieser beschädigungsfrei wieder entnehmbar in den Innenraum (4) des Behälters (2) eingesetzt werden kann.

7. Abwasserbehandlungssystem (1) nach einem der vorhergehenden Ansprüche, **dadurch gekennzeichnet, dass** der Zusatzbehälter (6) mit weiteren Funktionskomponenten (K) verbunden oder verbindbar ist und/oder eine UV-Lampe (15) zum Durchführen eines Desinfektionsschrittes (S5) aufweist.

8. Abwasserbehandlungssystem (1) nach einem der vorhergehenden Ansprüche, **dadurch gekennzeichnet, dass** als Funktionskomponente (K) mindestens ein Belüftungssystem (10) vorgesehen ist, wobei das Belüftungssystem (10) derartig funktional mit dem Behälter (2) zusammenwirkt, dass in einem Belüftungsschritt (S3) Luftblasen in das zu behandelnde Abwasser eingeleitet werden können, wobei das Belüftungssystem (10) lösbar, vorzugsweise beschädigungsfrei lösbar in dem Innenraum (4) des Behälters (2), beispielsweise in zumindest einer der beiden durch die Multifunktionswand (3) ausgebildeten Zonen (4a, 4b), angeordnet ist, und/oder lösbar, vorzugsweise beschädigungsfrei lösbar in dem mindestens einen Zusatzbehälter (6) angeordnet ist.

9. Abwasserbehandlungssystem (1) nach einem der vorhergehenden Ansprüche, **dadurch gekennzeichnet, dass** als Funktionskomponente (K) mindestens ein Festbettmodul (11) mit Trägerkörpern (11a) vorgesehen ist, wobei das mindestens eine Festbettmodul (11) derartig mit dem Behälter (2) funktional zusammenwirkt, dass bei Durchführung der Behandlungsschritte (S) sessile Biomasse erzeugt werden kann, wobei das Festbettmodul (11) lösbar, vorzugsweise beschädigungsfrei lösbar in dem Innenraum (4) des Behälters (2), beispielsweise in zumindest einer der beiden durch die Multifunktionswand (3) ausgebildeten Zonen (4a, 4b), und/oder lösbar, vorzugsweise beschädigungsfrei lösbar in dem mindestens einen Zusatzbehälter (6) angeordnet ist.

10. Abwasserbehandlungssystem (1) nach einem der vorhergehenden Ansprüche, **dadurch gekennzeichnet, dass** der Behälter (2) mit ausgebildetem Innenraum (4) transportierbar ist, wobei der Behälter (2) beispielsweise als ISO-Container (2a) ausgeführt ist, z.B. nach ISO-Norm 668.

11. Verfahren zum Ausbilden eines Abwasserbehandlungssystems (1), insbesondere eines Abwasserbehandlungssystems (1) nach einem der vorhergehenden Ansprüche, mit mindestens den folgenden Schritten:
- Bereitstellen eines Behälters (2) mit einem Innenraum (4);
- Bereitstellen mindestens einer Funktionskomponente (F), wobei die mindestens eine Funktionskomponente (K) in Abhängigkeit davon bereitgestellt wird, in welchen Behandlungsschritten (S) das Abwasser in dem ausgebildeten Abwasserbehandlungssystem (1) biologisch behandelt werden soll und/oder welcher Behandlungszweck (Z) vorgegeben ist, so dass der Behälter (2) mit der mindestens einen Funktionskomponente (K) im ausgebildeten Abwasserbehandlungssystem (1) derartig funktional zusammenwirken kann, dass das Abwasser zum Erreichen des vorgegebenen Behandlungszweckes (Z) unter Mitwirkung der mindestens einen Funktionskomponente (K) in ein oder mehreren Behandlungsschritten (S) biologisch behandelt werden kann, wobei als Funktionskomponente (K) zumindest bereitgestellt wird
-- mindestes eine Multifunktionswand (3) und/oder
-- mindestens ein Zusatzbehälter (6); und
- in Abhängigkeit des vorgegebenen Behandlungszwecks (Z):
-- Ausbilden einer lösbaren Verbindung zwischen dem Behälter (2) und zumindest der mindestens einen Multifunktionswand (3) und/oder des mindestens einen Zusatzbehälters (6) als Funktionskomponente (K) und/oder
-- Einstellen oder Umstellen zumindest der mit dem Behälter (2) verbundenen mindestens einen Multifunktionswand (3) als Funktionskomponente (K) zum Ausbilden des Abwasserbehandlungssystems (1).

12. Verfahren nach Anspruch 11, **dadurch gekennzeichnet, dass** die mindestens eine Multifunktionswand (3) derart mit dem Behälter (2) verbunden ist oder wird, dass der Innenraum (4) des Behälters (2) in mindestens zwei Zonen (4a, 4b) unterteilt wird,
wobei die Multifunktionswand (3) mindestens eine Durchtrittsöffnung (5) aufweist, wobei die mit dem Behälter (2) verbundene Multifunktionswand (3) derartig eingestellt oder umgestellt, vorzugsweise beschädigungsfrei eingestellt oder umgestellt wird,
- dass alle Durchtrittsöffnungen (5) in die geschlossene Stellung (5G) überführt werden, um das Abwasser in den beiden voneinander getrennten Zonen (4a, 4b) in unterschiedlichen Behandlungsschritten (S) biologisch zu behandeln, oder
- dass zumindest einige der Durchtrittsöffnungen (5), vorzugsweise alle Durchtrittsöffnungen (5), in die geöffnete Stellung (5O) überführt werden, um das Abwasser in den beiden dann miteinander verbundenen Zonen (4a, 4b) in denselben Behandlungsschritten (S) biologisch zu behandeln.

13. Verfahren nach Anspruch 11 oder 12, **dadurch gekennzeichnet, dass** der mindestens ein Zusatzbehälter (6) mindestens einen Zusatzbehälter-Anschluss (9) aufweist, über den eine wieder lösbare fluidleitende Verbindung, vorzugsweise eine beschädigungsfrei wieder lösbare fluidleitende Verbindung, mit dem Behälter (2) hergestellt wird, so dass der Behälter (2) derartig funktional mit dem Zusatzbehälter (6) zusammenwirkt, dass in dem Zusatzbehälter (6) befindliches Abwasser oder Flüssigkeiten oder flüssigkeitsähnliche Substanzen in denselben Behandlungsschritten (S) wie in dem Behälter (2) oder in sich davon unterscheidenden Behandlungsschritten (S) biologisch behandelbar ist.

14. Verfahren nach einem der Ansprüche 11 bis 13, **dadurch gekennzeichnet, dass** als Funktionskomponente (K) mindestens ein Belüftungssystem (10) bereitgestellt wird und dieses lösbar, vorzugsweise beschädigungsfrei lösbar, in dem Innenraum (4) des Behälters (2), beispielsweise in zumindest einer der beiden durch die Multifunktionswand (3) ausgebildeten Zonen (4a, 4b), angeordnet wird, und/oder lösbar, vorzugsweise beschädigungsfrei lösbar, in dem Zusatzbehälter (6) angeordnet wird, so dass das Belüftungssystem (10) derartig funktional mit dem Behälter (2) zusammenwirken kann, dass in einem Belüftungsschritt (S3) Luftblasen in das zu behandelnde Abwasser eingeleitet werden können.

15. Verfahren nach einem der Ansprüche 11 bis 14, **dadurch gekennzeichnet, dass** als Funktionskomponente (K) mindestens ein Festbettmodul (11) mit Trägerkörpern (11a) bereitgestellt wird und diese beschädigungsfrei lösbar in dem Innenraum (4) des Behälters (2), beispielsweise in zumindest einer der beiden durch die Multifunktionswand (3) ausgebildeten Zonen (4a, 4b), angeordnet wird und/oder lösbar, vorzugsweise beschädigungsfrei lösbar, in dem Zusatzbehälter (6) angeordnet wird, so dass das mindestens eine Festbettmodul (11) derartig funktional mit dem Behälter (2) zusammenwirken kann, dass bei Durchführung der Behandlungsschritte (S) sessile Biomasse erzeugt werden kann.
